(19) Europäisches Patentamt
European Patent Office
Office européen des brevets

(11) **EP 1 630 013 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(51) Int Cl.:
*B60H 1/00* (2006.01)    *B60H 1/22* (2006.01)

(21) Anmeldenummer: **04020649.2**

(22) Anmeldetag: **31.08.2004**

(54) **Elektrische Zusatzheizung für Kraftfahrzeuge mit Stromsicherung**

Electric supplementary heating for vehicles with current safety

Chauffage électrique supplémentaire pour véhicules avec une sécurité de courant

(84) Benannte Vertragsstaaten:
**DE ES FR GB IT**

(43) Veröffentlichungstag der Anmeldung:
**01.03.2006 Patentblatt 2006/09**

(73) Patentinhaber: **Catem GmbH & Co. KG**
**76863 Herxheim bei Landau (DE)**

(72) Erfinder:
• **Bohlender, Franz**
**67870 Kandel (DE)**

• **Uhl, Günter, Dr.-Ing.**
**74921 Helmstadt-Bargen (DE)**

(74) Vertreter: **Grünecker, Kinkeldey,**
**Stockmair & Schwanhäusser**
**Anwaltssozietät**
**Leopoldstrasse 4**
**80802 München (DE)**

(56) Entgegenhaltungen:
**EP-A2- 1 157 869      DE-A1- 10 061 458**
**GB-A- 2 396 982      US-A- 5 229 579**
**US-A1- 2002 167 227**

**Beschreibung**

Die Erfindung betrifft eine elektrische Heizvorrichtung zur Lufterwärmung, insbesondere für den Einsatz als elektrische Zusatzheizung in Kraftfahrzeugen.

In Kraftfahrzeugen mit verbrauchsoptimierten Motoren werden elektrische Heizvorrichtungen zur Beheizung des Innenraums und auch des Motors verwendet. Gleich nach dem Start des Verbrennungsmotors kann dieser noch nicht ausreichend Wärmeenergie zur Verfügung stellen. Dieser Zeitraum kann mit elektrischen Zusatzheizungen überbrückt werden.

Der Einsatz von elektrischen Heizvorrichtungen ist jedoch nicht auf den Kraftfahrzeugbereich beschränkt. Elektrische Heizvorrichtungen sind auch für eine Mehrzahl anderer Einsatzzwecke geeignet, insbesondere im Bereich von Hausinstallationen zur Raumklimatisierung, Industrieanlagen und dergleichen.

Dokument DE 100 61 458 A1 beschreibt ein Verfahren zur Temperaturregelung einer mit einem PTC-Heizelement arbeitenden elektrischen Heizung. Die Regelung basiert auf einer Bestimmung des Ist-Wertes der Stromstärke durch das Heizelement und dessen Vergleich mit dem Sollwert, der einer vorgegebenen Temperatur entspricht. In Abhängigkeit von der Abweichung des Istwertes vom Sollwert wird die anliegende Spannung gesteuert.

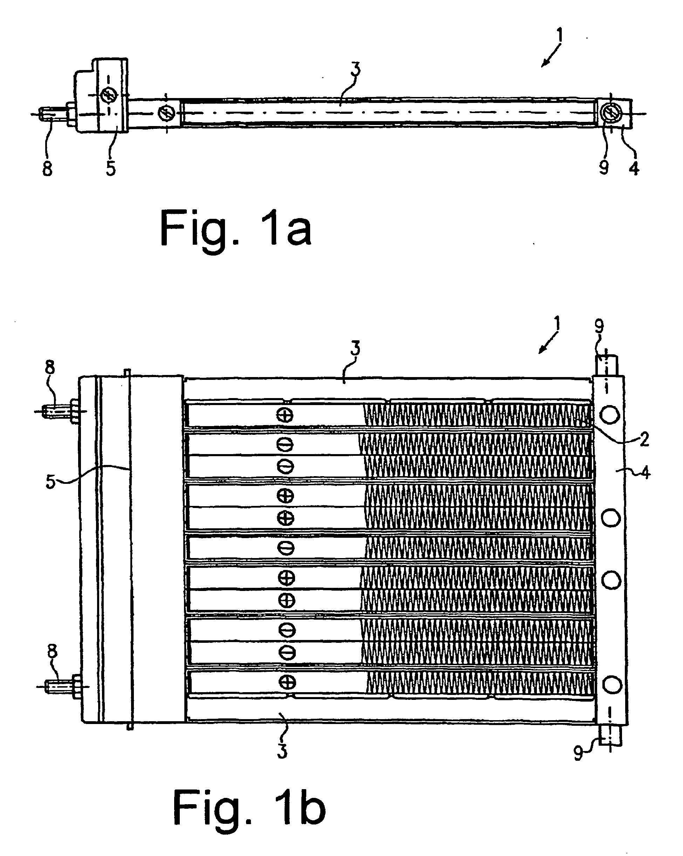

Ein Beispiel einer elektrischen Heizvorrichtung für den Einsatz in Kraftfahrzeugen ist in Fig. 1a und Fig. 1b dargestellt. Während Fig. 1 b eine Aufsicht auf die elektrische Heizvorrichtung zeigt, ist in Fig. 1a eine Seitenansicht wiedergegeben. Die elektrische Heizvorrichtung 1 weist ein Heizregister auf, das aus einer Mehrzahl geschichteter Heizelemente und benachbart zu diesen angeordneten Radiatorelementen bzw. Wärmeleitblechen besteht. Die Heizelemente sind als Widerstandselemente, insbesondere als PTC-Heizelemente ausgebildet.

Das in Fig. 1a und Fig. 1b gezeigte Heizregister ist in einem Rahmen gehalten, der aus gegenüberliegend angeordneten Längsholmen 3 und senkrecht zu diesen angeordneten Seitenholmen 4 und 5 besteht. Die Holme des Rahmens sind aus Metall oder Kunststoff gefertigt.

Die beiden Fig. 1b gezeigten Längsholme 3 sind im Wesentlichen gleich aufgebaut. Die gegenüberliegend angeordneten Seitenholme 4 und 5 unterscheiden sich jedoch dahingehend, dass der Seitenholm 5 als einseitig offener Kasten ausgebildet ist. Der kastenförmige Seitenholm 5 ist auf der dem Heizregister gegenüberliegenden Seite offen ausgebildet. In diesen Kasten ist eine Steuervorrichtung einsetzbar, die die Wärmeabgabe der Heizstufen des Heizregisters, insbesondere der PTC-Heizelemente, über eine Regelung des zugeführten Stroms steuert. Die offene Seite des als Kasten ausgebildeten Seitenholms 5 kann nach dem Einsetzen der Steuervorrichtung mit einem aufsteckbaren oder aufklebbaren Deckel vorschlossen werden.

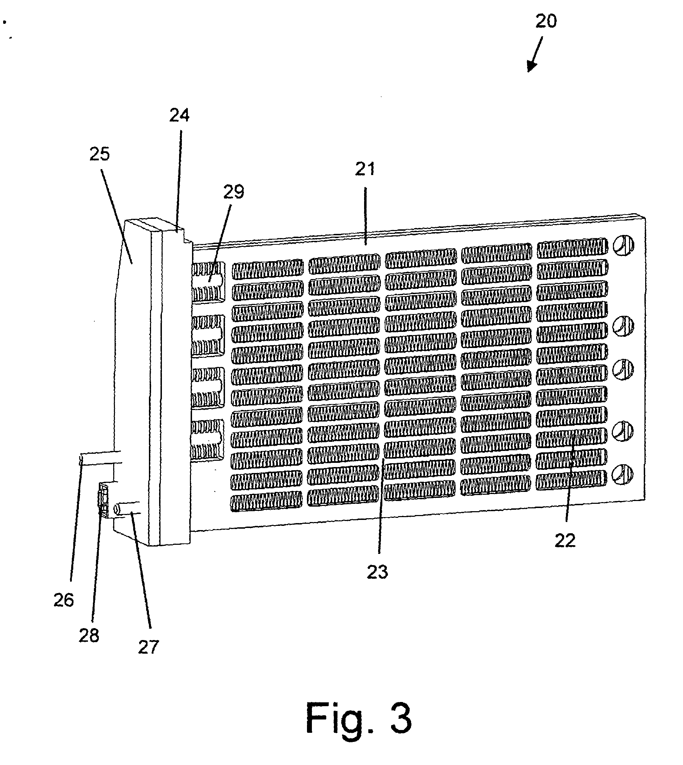

Andere Bauformen einer elektrischen Heizvorrichtung halten den geschichteten Aufbau aus Heizelementen und Radiatorelementen in einem Kunststoffgehäuse zusammen. Ein Beispiel für einen solchen Aufbau ist in Fig. 3 wiedergegeben und wird nachfolgend unter Bezugnahme auf Fig. 3 im einzelnen beschrieben.

In die Heizvorrichtung ist eine Steuereinheit integriert, die die Heizleistung der Heizelemente einstellt. Die Steuereinheit ist vorzugsweise in Form einer Platine mit einer Mehrzahl von Leistungshalbleiterbauelementen realisiert. Die Leistungshalbleiter stellen den den Heizelementen zuzuführenden Strom gemäß der Ansteuerung durch die Steuereinheit ein. Der von der Steuereinheit auf die einzelnen Heizstufen aufgeteilte Strom wird über Anschlussbolzen 8 der Heizvorrichtung zugeführt. Die Anschlussbolzen sind so ausgebildet, dass sie die geforderten Heizströme bis zu 200 Ampere problemlos leiten können.

Zusätzlich ist die Heizvorrichtung, insbesondere im Bereich der Steuereinheit, mit einem Steckersockel ausgestattet, der eine externe Ansteuerung der Heizvorrichtung ermöglicht, insbesondere zur Zuführung einer Heizleistungsanforderung. Vorzugsweise wird die Heizleistungsanforderung über einen Kraftfahrzeugbus zugeführt.

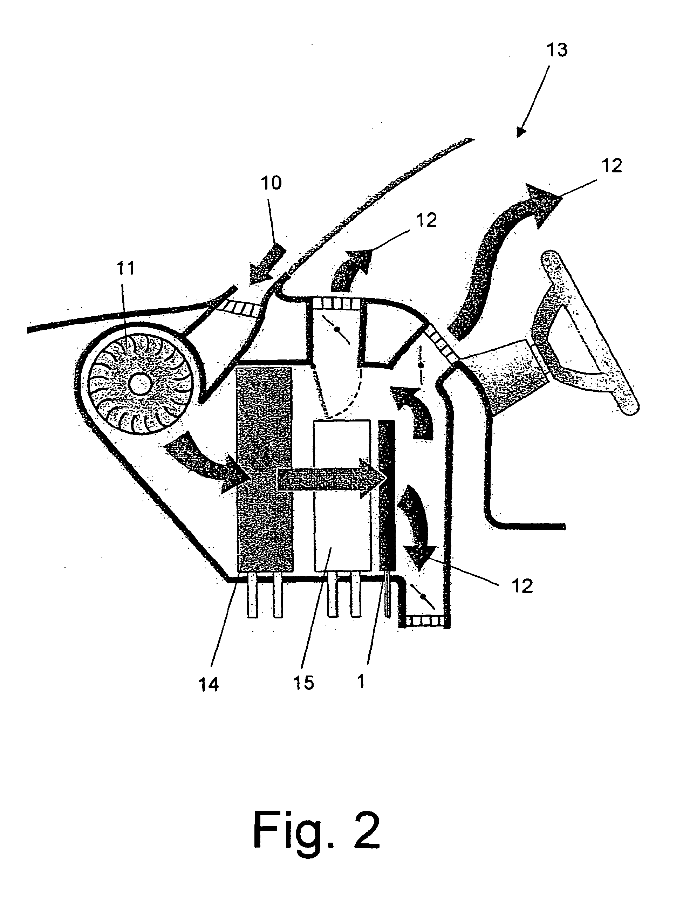

Die elektrischen Zusatzheizungen dienen vorzugsweise zum Einsatz in einem Heiz-Klimagerät in Kraftfahrzeugen. Ein Beispiel für ein solches Heiz-Klimagerät ist in Fig. 2 dargestellt. Das Heiz-Klimagerät saugt Außenluft 10 über ein Gebläse 11 an, die dem Kraftfahrzeuginnenraum 13 zugeführt wird. Dabei durchströmt die Luft zuvor einen Verdampfer 14 und einen Wasser-Wärmetauscher 15. Der Wasser-Wärmetauscher 15 gibt die Wärmeenergie des Kühlwassers an die dem Innenraum zuzuführende Luft ab. Anschließend strömt die erwärmte Luft 12 über entsprechende Ausströmer in den Kraftfahrzeuginnenraum 13.

Solange die Höhe der Kühlwassertemperatur nicht ausreicht, um die angesaugte Luft 10 genügend zu erwärmen, übernimmt diese Aufgabe eine elektrische Zusatzheizung 1. Diese ist vorzugsweise dem Wärmetauscher 15 nachgeschaltet.

Die Steuereinheit der elektrischen Heizvorrichtung setzt den benötigten Wärmebedarf in eine entsprechende Ansteuerung von Halbleiterschaltern um, die den den jeweiligen Heizstufen zuzuführenden Strom schalten. Als Halbleiterschalter werden Leistungshalbleiterbauelemente verwendet, insbesondere Leistungstransistoren. Die Leistungstransistoren müssen teilweise Ströme bis über 50 Ampere schalten. Bei einer elektrischen Zusatzheizung mit einer Heizleistung von beispielsweise 1.600 Watt, die auf vier Stromkreise aufgeteilt ist, kann die Leistungsaufnahme durch Puls-Breiten-Modulation (PWM) stufenlos zwischen 0 % und 100 % eingestellt werden. Jeder Stromkreis, d.h. jede Heizstufe, wird durch einen Leistungshalbleiter (vorzugsweise einen MOSFET) periodisch ein- und ausgeschaltet. Dabei fließen durch jeden Leistungshalbleiter Ströme von bis zu 50 Ampere.

Im Gegensatz zu mechanischen Schaltern wie Relais sind Halbleiterschalter jedoch empfindlich gegen Überlastung. Geringe Vorschädigungen der Leistungstransistoren, beispielsweise in Form von Chip-Cracks, können im Überlastungsfall (EOS - electrical overstress) zu einem erhöhten Ausfallrisiko führen, und zwar aufgrund eines "Durchlegierens" der verschiedenen Isolationsschichten des Transistors. Damit wird die Transistorfunktion zerstört. Als Folge davon wird der Transistor dauerhaft leitend und nicht mehr abschaltbar und führt den Heizelementen ständig maximalen Strom zu.

Beim Durchlegieren von Leistungstransistoren in der Steuerschaltung einer elektrischen Heizvorrichtung ist das Risiko, dass von den Heizelementen eine Überhitzung und damit die Gefahr von Zerstörungen im Umfeld ausgeht, im allgemeinen aufgrund der Verwendung von PTC-Heizelementen ausgeschlossen. PTC-Heizungen gelten deshalb als gefahrlos, da die temperaturabhängige Widerstandskennlinie der PTC-Elemente eine Überhitzung sicher verhindert. Eine dauerhafte Leitung der Halbleiterschalter führt jedoch zu einer Entladung der Batterie, wenn das Fahrzeug längere Zeit abgestellt ist.

Beim Durchlegieren ist der leitende Zustand eines Halbleiterschalters undefiniert, der Durchlasswiderstand des Halbleiterschalters kann in diesem Zustand um ein Mehrfaches höher als im Normalzustand sein. Durch den erhöhten Durchlasswiderstand vergrößert sich der Spannungsabfall in dem Halbleiterbauelement und die umgesetzte Verlustleistung wächst entsprechend an. Die übermäßige Erwärmung des Halbleiterbauteils führt zu einer thermischen Überlastung, die damit die gesamte Steuerelektronik überhitzt mit der Folge von Verschmorungen und einer Zerstörung der Steuerelektronik und Komponenten, die im Umfeld der Heizvorrichtung angeordnet sind.

Es droht bei PTC-Heizungen somit zwar keine Gefahr durch Überhitzung der Heizelemente, jedoch kann eine entsprechende Gefahr von den Schalttransistoren selbst ausgehen. Die Zerstörung des Transistors kann damit als Folgeschaden im ungünstigsten Fall eine Zerstörung von Fahrzeugkomponenten nach sich ziehen.

Leistungshalbleiter zum Schalten hoher Ströme werden heutzutage in Millionenstückzahlen verwendet. Die Gefahr, dass es trotz der hohen Zuverlässigkeiten von Halbleiterbauelementen mit Ausfallraten im ppm-Bereich zu Schäden am Kraftfahrzeug kommt, ist dennoch nicht vernachlässigbar. Zu diesem Zweck sind Sicherungen erforderlich, die im Falle eines dauernd leitenden Halbleiterbauelementes einer PTC-Heizung den Stromfluss zuverlässig unterbrechen.

Aufgabe der Erfindung ist es, eine elektrische Heizvorrichtung und ein Verfahren zum Steuern einer elektrischen Heizvorrichtung anzugeben, die das Risiko, das von einem Transistorausfall ausgeht, vermindern.

Diese Aufgabe wird mit den Merkmalen der unabhängigen Patentansprüche gelöst.

Es ist der besonderer Ansatz der vorliegenden Erfindung, die Sicherheit von PTC-Heizungen zusätzlich zu erhöhen. Bei herkömmlichen PTC-Heizungen galt schon die Verwendung von PTC-Heizelementen als ausreichende Sicherheitsmaßnahme gegen eine Überhitzungsgefahr. Durch die besondere Temperaturabhängigkeit des Widerstands von PTC-Heizelementen kann eine übermäßige Erwärmung sicher verhindert werden.

Erfindungsgemäß wird die Funktion des Leistungshalbleiters, der den PTC-Heizelementen Strom zuführt, zusätzliche überwacht. Wird der Leistungshalbleiter nicht zur Abgabe von Strom an die PTC-Heizelemente angesteuert und führt der Leistungshalbleiter den Heizelementen dennoch Strom zu, so wird die Stromzufuhr zu dem Leistungshalbleiter aus Sicherheitsgründen aktiv unterbrochen. Auf diese Weise werden sowohl der Leistungshalbleiter als auch die PTC-Heizelemente bei Ausfall des Leistungshalbleiters zuverlässig von der Stromzufuhr getrennt. Damit kann bei einem Ausfall des Leistungshalbleiters ein Folgeschaden wirksam verhindert werden, da weder eine Überhitzung des Leistungshalbleiters noch der Heizelemente stattfinden kann. Somit wird die Sicherheit beim Einsatz elektrischer PTC-Zusatzheizungen in Kraftfahrzeugen deutlich erhöht.

Vorzugsweise ist die Stromüberwachungsfunktion in den Leistungshalbleiter integriert. Durch die Verwendung von "intelligenten" Transistoren, die als Zusatzfunktion eine Strommessung bzw. Spannungsüberwachung des Lastkreises erlauben, kann eine Überwachung der Funktionalität des Leistungshalbleiters in besonders einfacher Weise realisiert werden.

Vorzugsweise ist zur Unterbrechung der Stromzuführung das Unterbrecherelement in der Stromzuführung zu dem wenigstens einen Leistungshalbleiter angeordnet. Damit kann eine Überhitzung des Leistungshalbleiters und/oder der Heizelemente sicher verhindert werden.

Vorzugsweise weist die Heizvorrichtung eine Mehrzahl von Leistungshalbleitern auf, die jeweils wenigstens ein zugeordnetes Heizelement ansteuern. Jede Stromzuführung ist mit einem separaten Unterbrecherelement ausgestattet, wobei bei Ausfall eines der Leistungshalbleiter beide gemeinsam unterbrochen werden. Damit wird der Aufwand zur Realisierung einer Unterbrechung ohne Einschränkung der Funktionalität deutlich vermindert. Beispielsweise können bei vier Heizstufen mit vier Leistungshalbleitern jeweils zwei Leistungshalbleiter mit einer gemeinsamen Unterbrechungsfunktion versehen werden. Damit kann in effizienter Weise, d.h. mit einem geringen Zusatzaufwand, ein schrittweises Abschalten der Heizvorrichtung erreicht werden. Wird ein unzulässiger Strom eines der Leistungshalbleiter erkannt, so wird die entsprechende Mehrzahl von "sicherheitstechnisch" gekoppelten Leistungshalbleitern abgeschaltet. Gleichzeitig bleiben die nicht dieser Gruppe zugeordneten Leistungshalbleiter weiter aktiv, so dass ein Komplettausfall der Heizvorrichtung vermieden wird.

Die Unterbrechung wird über einen Schalter bewirkt, der einen Kurzschluss erzeugt. Durch den Kurzschluss wird die Strombelastung in der Stromzuführung so groß, dass der entsprechende Leitungsabschnitt aufgetrennt wird. Gemäß einer besonderen Ausführungsform wird dazu ein Leiterbahnabschnitt so dimensioniert, dass er bei einem Kurzschlussstrom die Stromleitung unterbricht. Damit lässt sich in einfacher Weise ein Abschalten der entsprechenden Heizstufe erreichen.

Durch die gemeinsame Verwendung eines Kurzschlussschalters für eine Mehrzahl von "gekoppelten" Heizstufen, d.h. Leistungshalbleitern, kann mit geringem Hardwareaufwand eine größtmögliche Sicherheit gegenüber Halbleiterausfällen erreicht werden.

Vorzugsweise ist der Leiterbahnquerschnitt so dimensioniert, dass eine Unterbrechung bei einem vorgegebenen Stromwert erfolgt, der um einen festgelegten Betrag oberhalb des maximal den PTC-Heizelementen der Heizstufen über die Leiterbahn zugeführten Stroms liegt.

Vorzugsweise wird zur Überwachung der Funktionalität des Leistungshalbleiters die Spannung des Lastkreises überwacht. Damit kann auch bei Ausfall einer in den Leistungshalbleiter integrierten Strommessung eine sichere Überwachung erreicht werden.

Verzugsweise werden von der Steuereinheit alle Leistungshalbleiter abgeschaltet, wenn eine Unterbrechung der Stromzufuhr zu einem der Leistungshalbleiter bewirkt werden soll. Damit wird garantiert, dass zur Unterbrechung ein maximaler Kurzschlussstrom zur Verfügung steht.

Die Unterbrechung über den Kurzschlussschalter erfolgt durch eine Ansteuerung des Kurzschlussschalters für eine vorgegebene Zeitdauer. Anschließend wird die erreichte Wirkung vorzugsweise noch einmal überprüft. Sollte dabei festgestellt werden, dass der betroffene Leistungshalbleiter immer noch Strom den PTC-Heizelementen zuführt, so kann die Ansteuerung des Kurzschlussschalters gegebenenfalls mehrfach wiederholt werden. Dadurch kann eine zuverlässige Abschaltung des ausgefallenen Leistungshalbleiters über eine Leiterbahnsicherung erreicht werden, auch wenn der Kurzschlussstrom aufgrund der Stromentnahme anderer Verbraucher zum Zeitpunkt des ersten erzeugten Kurzschlusses nicht zur Unterbrechung der Stromzuführung zu dem Leistungshalbleiter ausgereicht haben sollte.

Vorzugsweise wird als Schalter, der den Kurzschluss erzeugt, ein Relais oder ein Halbschalterschalter verwendet, insbesondere ein IGBT, d.h. ein Insulated Gate Bipolar Transistor.

Die Steuereinheit setzt eine Heizleistungsanforderung an die elektrische Heizvorrichtung vorzugsweise mit einer Pulsbreitenmodulation (PWM) um. Damit kann der Leistungshalbleiter in einfacher Weise und mit geringer Verlustleistung betrieben werden.

Die Heizleistungsanforderung enthält die Steuereinheit vorzugsweise über einen Kraftfahrzeugdatenbus.

Weitere vorteilhafte Ausgestaltungen der Erfindung sind Gegenstand der Unteransprüche.

Im Folgenden wird die Erfindung anhand der beiliegenden Zeichnungen beschrieben, in denen:

Fig. 1a eine Seitenansicht einer elektrischen Heizvorrichtung zeigt,

Fig. 1b eine Aufsicht auf eine elektrische Heizvorrichtung gemäß Fig. 1a zeigt,

Fig. 2 schematisch den Aufbau eines herkömmlichen Heiz-Klimagerätes in einem Kraftfahrzeug darstellt,

Fig. 3 eine perspektivische Ansicht eines zu Fig. 1 alternativen Aufbaus einer elektrischen Heizvorrichtung zeigt,

Fig. 4a eine perspektivische Ansicht einer Steuerschaltung der in Fig. 3 gezeigten Heizvorrichtungen darstellt,

Fig. 4b eine Aufsicht auf die in Fig. 4a gezeigt Steuerschaltung darstellt,

Fig. 5 in Blockdiagramm-artiger Form den erfindungsgemäßen Aufbau der elektrischen Heizvorrichtung gemäß der vorliegenden Erfindung für eine PTCHeizung mit nur einer Heizstufe zeigt,

Fig. 6 ein Ablaufdiagramm des erfindungsgemäßen Verfahrens zum sicheren Betreiben einer elektrischen PTC-Heizung zeigt,

Fig. 7 eine beispielhafte Schaltung zur zusätzlichen Absicherung jeder Heizstufe einer PTC-Heizung gemäß der vorliegenden Erfindung zeigt,

Fig. 8 schematisch den Aufbau einer Leiterbahnsicherung für die Schaltung gemäß Fig. 7 zeigt,

Fig. 9 eine beispielhafte Schaltung zur gemeinsamen zusätzlichen Absicherung einer Mehrzahl von Heizstufen zeigt,

Fig. 10 ein beispielhaftes Leiterbahnlayout für eine Leitbahnsicherung von zwei PTC-Heizstufen über einen gemeinsamen Kurzschlussschalter zeigt und

Fig. 11 eine elektrische Ersatzschaltung der Leiterbahnstruktur aus Fig. 10 zeigt.

Die Erfindung betrifft elektrische Heizvorrichtungen, in die eine Steuereinheit integriert ist, um den den einzelnen Heizstufen mit ihren jeweiligen Heizelementen zuzuführenden Strom einzustellen. Die Stromeinstellung erfolgt in Abhängigkeit von einer Heizleistungsanforderung, die extern der Heizvorrichtung zugeführt wird.

In den in Fig. 1 und Fig. 3 gezeigten Ausführungsformen elektrischer Luftheizer ist jeweils an einem Ende des Heizregisters in einem Gehäuseabschnitt eine Steuerplatine mit den Leistungshalbleitern angeordnet. Die in Fig. 3 gezeigte Ausführungsform unterscheidet sich von der in Fig. 1 dargestellten Ausführungsform in dem Aufbau des Heizregistergehäuses. Während die Radiatorelemente und Heizelemente gemäß Fig. 1 in einem aus Holmen 3, 4 und 5 gebildeten Rahmen gehalten werden, werden gemäß Fig. 3 die Radiatorelemente 22 und Heizelemente in einem Kunststoffgehäuse gehalten, das an den Luftdurchtrittsöffnungen über eine gitterartige Struktur 23 verstärkt ist.

Bei beiden Ausführungsformen gemäß Fig. 1 und Fig. 3 ist die Steuereinheit außerhalb des Luftkanals des aufzuheizenden Luftstroms eines Heiz-Klimagerätes in einem Kraftfahrzeug angeordnet, und zwar in einem separaten Gehäuseabschnitt. In den Luftkanal des Heiz-Klimagerätes des Kraftfahrzeugs ragt nur das Heizregister 21.

Fig. 3 zeigt zusätzlich eine besondere Ausgestaltung der Kühlung der Leistungshalbleiter der Steuereinheit. Zu diesem Zweck ragen die Kühlelemente 29 in Fenster, die in dem Heizregisterabschnitt vorgesehen sind. Die Fenster für die Kühlelemente ragen ebenfalls in den Luftkanal und geben ihre Wärme an die aufzuheizende Luft ab. Auf diese Weise kann die in den Leistungshalbleitern produzierte Verlustleistung effizient und energiesparend abgeführt werden.

Die in Fig. 3 gezeigte Heizvorrichtung umfasst außer dem Heizregister 21 einen Gehäuseabschnitt 24, der die Steuerplatine aufnimmt, und einen Deckel 25, der den "Elektronikraum" der Steuerelektronik abdeckt.

Die elektrische Heizvorrichtung weist folgende externe Anschlüsse auf. Zwei Anschlussbolzen 8 bzw. 26, 27, über die die Heizvorrichtung mit Masse und dem Pluspol des Bordnetzes verbindbar ist. Zusätzlich ist die Heizvorrichtung mit einem Anschluss 28 ausgestattet, über den insbesondere eine Heizleistungsanforderung an die Steuerschaltung übertragen wird. Vorzugsweise erfolgt die Übertragung der Heizleistungsanforderung und möglicher weiterer Steuerbefehle über einen Kraftfahrzeugdatenbus, insbesondere den CAN-Bus.

Obwohl Fig. 1 und Fig. 3 den Aufbau von Luftheizern zeigen, ist die vorliegende Erfindung nicht ausschließlich auf den Einsatz in Luftheizern beschränkt. In gleicher Weise kann die vorliegende Erfindung zur Erhöhung der Sicherheit von Wasserheizern mit PTC-Heizelementen verwendet werden. Anstelle des in Fig. 1 und Fig. 3 gezeigten Heizregisters wird ein entsprechender Aufbau zur Übertragung der Heizleistung an durchströmendes Wasser verwendet.

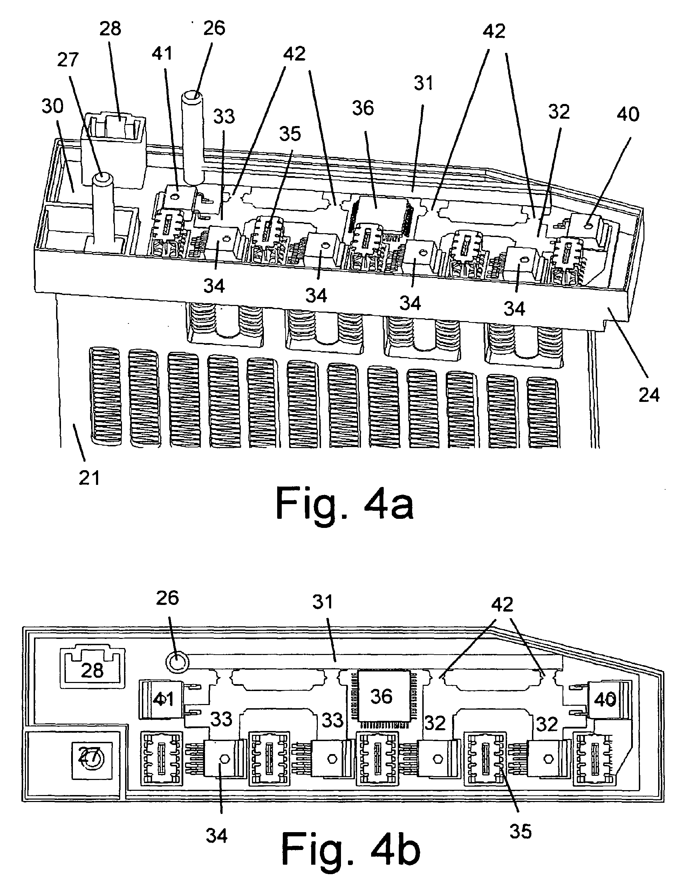

Eine beispielhafte Realisierung der Steuerschaltung einer Heizvorrichtung ist in Fig. 4a und Fig. 4b wiedergegeben. Fig. 4a zeigt eine perspektivische Ansicht der Steuerschaltung der in Fig. 3 dargestellten Heizvorrichtung, bei der der Deckel 25 abgenommen wurde. Fig. 4b zeigt eine Aufsicht auf die Steuerplatine 30 der Fig. 4a.

Die in den Gehäuseabschnitt 24 eingesetzte Steuerplatine 30 verteilt den über den Anschlussbolzen 26 aufgenommen Strom und verteilt diesen über eine Stromschiene 31 an die einzelnen Leistungshalbleiter 34 über Stromzuführungen 32, 33. In Abhängigkeit von der Heizleistungsanforderung steuert der Microcontroller 36 (d.h. die Steuereinheit) die Leistungshalbleiter 34 an. Die Leistungshalbleiter 34 führen gemäß den Steuersignalen von dem Microcontroller 36 Strom den jeweiligen Heizstufen zu. Vorzugsweise setzt der Microcontroller die Heizleistungsanforderung über eine Puls-Breiten-Modulation (PWM) in Steuersignale an die Leistungshalbleiter um. Gemäß der in Fig. 4 dargestellten Ausführungsform wird der Strom über aus dem Heizregister in die Federelemente 35 ragende Kontaktzungen übertragen.

Die in Fig. 4 dargestellte Heizvorrichtung umfasst insgesamt vier Heizstufen, die von jeweils einem Leistungshalbleiter 34 gesteuert werden. Jedem Leistungshalbleiter 34 wird Strom zur Zuführung zu den Heizelementen von der Stromschiene 31 über Leiterbahnverbindungen 32, 33 zugeführt. Gemäß der leitend/nichtleitend Ansteuerung durch den Microcontroller 36 stellt jeder Leistungshalbleiter den jeweils den Heizelementen zuzuführenden Strom ein, so dass der Strom entsprechend an die PTC-Heizelemente in dem Heizregister weitergeleitet wird.

Bei einem Ausfall des Leistungshalbleiters 34 ist dieser dauerhaft leitend und erlaubt keine Abschaltung des den Heizelementen zugeführten Stroms mehr. Dabei wächst die im Leistungshalbleiter 34 umgesetzte Verlustleistung an und es kommt zu einer übermäßigen Erwärmung dieses Bauteils. Dies führt zu einer thermische Überlastung der gesamten Baugruppe mit der Folge von Verschmorung und eventuell auch weiterer Zerstörungen im Umfeld.

Um einen solchen Defekt in einer PTC-Heizung sicher erkennen zu können, wird erfindungsgemäß überprüft, ob der Lastkreis des Leistungshalbleiters 34 stromdurchflossen ist. Zu diesem Zweck wird entweder der Strom gemessen oder die Spannung des Lastkreises überprüft. Besonders effizient und mit besonders geringem zusätzlichen Hardwareaufwand und zusätzlichem Platzbedarf werden als Leistungshalbleiter 34 vorzugsweise Bauelemente mit integrierter Stromüberwachung verwendet, sogenannte "smart power Transistors".

Sobald in der Steuereinheit 36 festgestellt wird, dass ein Leistungshalbleiter 34 seinem Lastkreis, d.h. seiner Heizstufe, Strom zuführt, obwohl keine entsprechende Ansteuerung durch die Steuereinheit 36 vorliegt, wird eine Unterbrechung der Stromzufuhr zu (mindestens) diesem Leistungshalbleiter 34 eingeleitet. Zu diesem Zweck sind entsprechende Kurzschlussschalter 40, 41 auf der Steuerplatine 30 vorgesehen, die die Stromzufuhr von der Stromschine 31 zu diesem Leistungshalbleiter direkt auf Masse schalten, um durch die Stromüberlastung der Leitung eine Unterbrechung in der Zuleitung zu dem Leistungshalbleiter 34 zu erreichen.

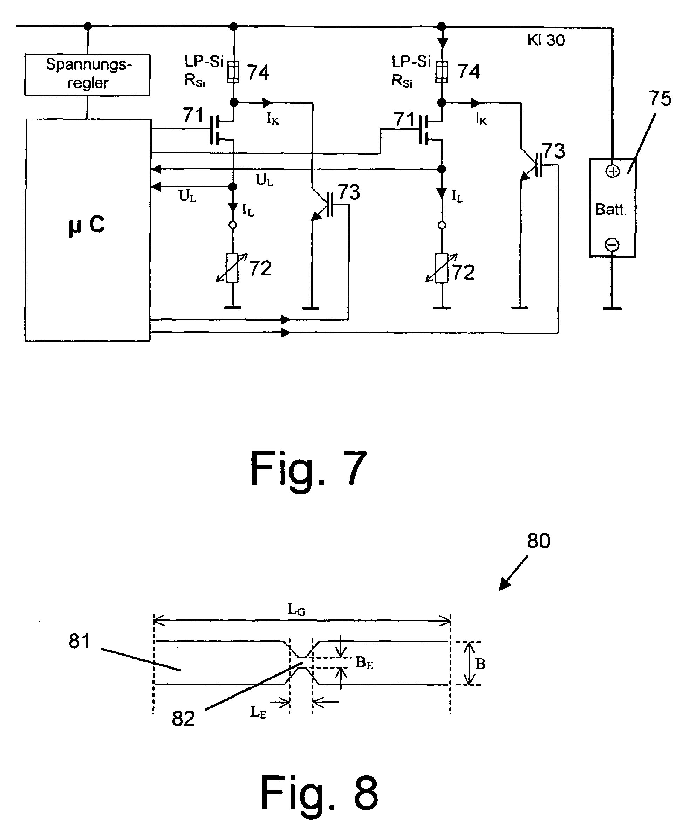

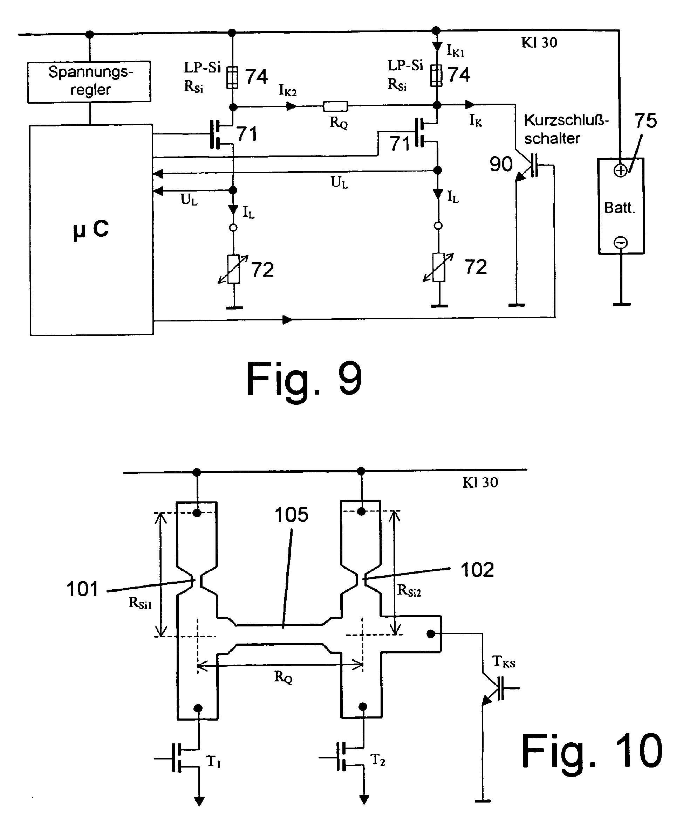

Damit durch den erhöhten Strom eine entsprechende Unterbrechung der Stromzufuhr erreicht wird, sind in dem Strompfad zu allen Leistungshalbleitern 32 jeweils Leiterbahnsicherungen 42 vorgesehen. Die Leiterbahnsicherungen 42 sind als Engstelle in dem Strompfad ausgebildet, die jeweils dem Kurzschlussstrom nicht standhält. Die Leiterbahnsicherung wird unter Bezugnahme auf Fig. 8 und Fig. 10 ausführlicher beschrieben.

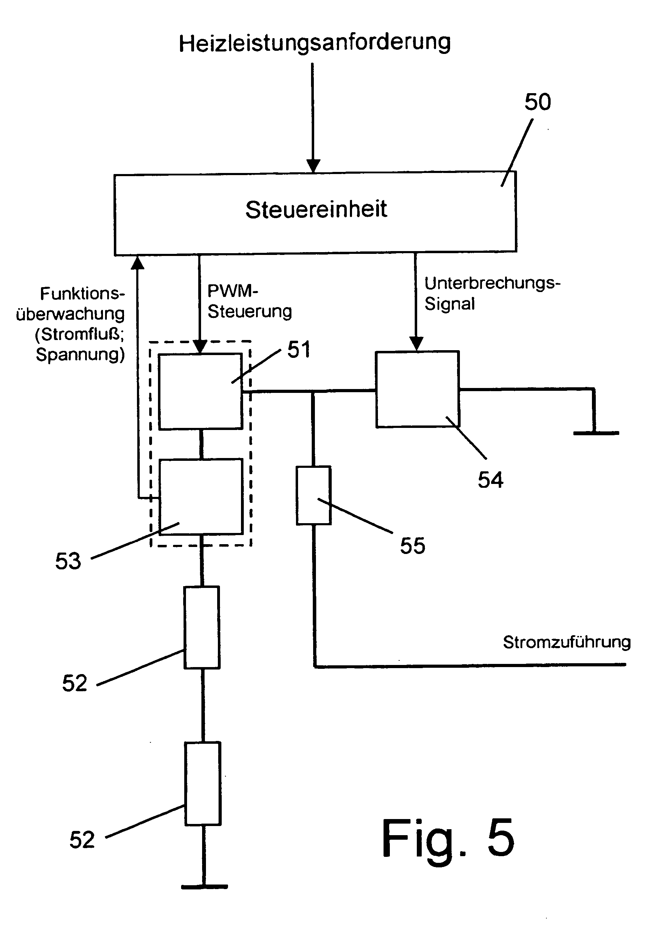

Fig. 5 zeigt schematisch den Aufbau des erfindungsgemäßen Sicherungskonzeptes. Eine Steuereinheit 50 der Heizvorrichtung enthält eine von außen zugeführte Heizleistungsanforderung. Diese wird in eine Ansteuerung der einzelnen Heizleistungsstufen umgesetzt. Vorzugsweise wird dazu eine Puls-Breiten-Modulation (PWM) verwendet. Der Einfachheit halber ist in Fig. 5 bloß eine einzige Heizstufe dargestellt. In entsprechender Weise kann jedoch eine Vielzahl von Heizleistungsstufen von der Steuereinheit 50 angesteuert werden, beispielsweise vier Heizstufen wie in Fig. 3 und Fig. 4 dargestellt. Die erfindungsgemäße Stromsicherung kann dabei jeweils für jeden Leistungshalbleiter separat oder gemeinsam für eine vorgegebene Mehrzahl von Heizleistungsstufen vorgesehen sein.

Über die PWM-Steuerung stellt der Leistungshalbleiter 50 den den PTC-Heizelementen 52 zugeführten Strom ein. Über eine Stromüberwachung 53 wird die Funktion des Leistungshalbleiters 51 kontrolliert. Die Stromüberwachung kann entweder über eine Strommessung oder alternativ über die an dem Lastkreis des Leistungshalbleiters 51 anliegende Spannung $U_L$ realisiert werden. Vorzugsweise ist die Überwachungsfunktion des Lastkreises in den Leistungshalbleiter integriert (durch die gestrichelte Einfassung der Blöcke 51 und 53 in Fig. 5 angedeutet).

Stellt die Steuereinheit 50 fest, dass ein Strom von einem Leistungshalbleiter 51 den zugeordneten Heizelementen 52 zugeführt wird, obwohl der Leistungshalbleiter nicht entsprechend angesteuert wird, so leitet die Steuereinheit 50 eine Unterbrechung der Stromzufuhr zu dem Leistungshalbleiter 51 ein.

Vorzugsweise wird die Unterbrechung über eine Leiterbahnsicherung erreicht, die einem Kurzschlussstromfluss nicht standhält. Die Steuereinheit 50 erzeugt zu diesem Zweck ein Unterbrechungssignal, über das ein Schalter 54 die Stromzufuhr zu dem Leistungshalbleiter 51 kurzschließt. Diesem Kurzschlussstrom, der höher als der im ordnungsgemäßen Betrieb maximal fließende Strom ist, hält die im Strompfad liegende Leiterbahnsicherung 55 nicht stand. Das Leiterbahnstück 55 brennt an der Engstelle durch und unterbricht damit dauerhaft den Stromfluss. Auf diese Weise kann zuverlässig ein fehlerhaftes Halbleiterbauelement erkannt und dauerhaft außer Betrieb gesetzt werden.

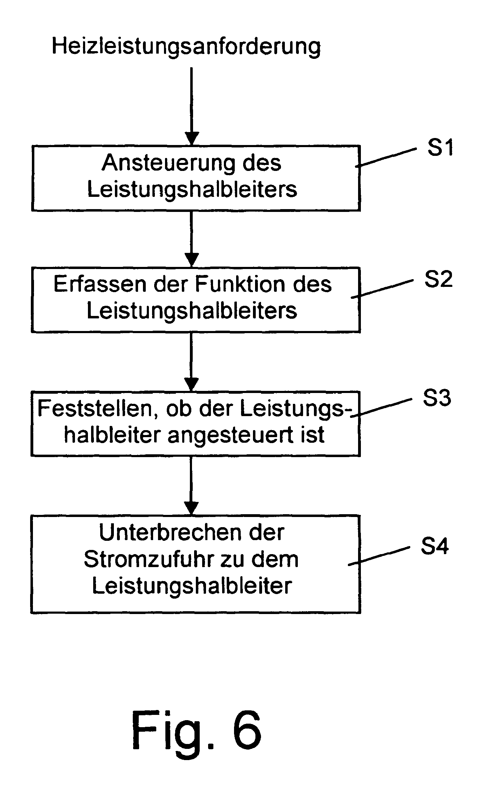

Das erfindungsgemäße Verfahren ist in dem Ablaufdiagramm der Fig. 6 dargestellt. In Abhängigkeit von einer externen Heizleistungsanforderung wird der zumindest eine Leistungshalbleiter 51 im Schritt S1 angesteuert. Die tatsächliche Funktion des Leistungshalbleiters wird im Schritt S2 überwacht. Dazu wird erfasst, ob der Lastkreis des Leistungshalbleiters 51 stromführend ist. Eine nicht ordnungsgemäße Funktionalität des Leistungshalbleiters liegt vor, wenn der Lastkreis stromführend ist, der Leistungshalbleiter jedoch nicht von der Steuereinheit entsprechend angesteuert wird (Schritt S3). Daraufhin wird im Schritt S4 die Stromzufuhr zu dem Leistungshalbleiter unterbrochen.

Um zuverlässig eine dauerhafte Unterbrechung der Stromzufuhr erreichen zu können, werden vorzugsweise vor Aktivierung des Kurzschlussschalters 54 alle (abschaltbaren) Heizstufen abgeschaltet. Damit fließt kein Strom über die anderen Heizstufen ab und es kann ein möglichst hoher Kurzschlussstrom und auf diese Weise eine sichere Unterbrechung der Zuleitung zu dem ausgefallenen Leistungshalbleiter 51 erreicht werden.

Zur Unterbrechung der Zuleitung zu dem ausgefallenen Leistungshalbleiter wird der Kurzschlussschalter 54 nur für eine kurze Zeit $T_{Br}$ aktiviert. Diese Zeit ist so ausgelegt, dass der während dieser Zeitdauer fließende Kurzschlussstrom die Leiterbahn-Sicherung 55 sicher auftrennen sollte.

Die Sicherheit kann weiter dadurch erhöht werden, dass nach Ablauf der Zeitspanne $T_{Br}$ eine Überprüfung durchgeführt wird, ob die Stromzuführung zu dem ausgefallenen Leistungshalbleiter tatsächlich unterbrochen ist. Dazu wird wie zuvor im Schritt S2 überprüft, ob der Lastkreis des Leistungshalbleiters stromdurchflossen ist. Wird dabei festgestellt, dass die Stromzufuhr nicht unterbrochen ist, so wird der Schritt S4 gegebenenfalls mehrfach wiederholt.

In Fig. 7 ist beispielhaft eine Schaltung für die Ansteuerung von Halbleiterschaltern in einer PTC-Heizung mit dem erfindungsgemäßen sicheren Ansteuerungskonzept gezeigt. Eine Steuereinheit µC stellt den über die Halbleiterschalter 71 jeder Heizstufe von der Batterie 75 zuzuführenden Strom ein. Entsprechend der Ansteuerung der Halbleiterschalter 71 durch die Steuereinheit wird den Heizelementen 72 Strom zugeführt und eine entsprechende Wärmeabgabe bewirkt.

Zusätzlich sind in Fig. 7 Kurzschlussschalter 73 für jede der Heizstufen vorgesehen. Als Kurzschlussschalter werden vorzugsweise Halbleiterschalter mit einer hohen Stromtragfähigkeit verwendet. Zusätzlich ist in den Strompfad zu den jeweiligen Leistungshalbleitern 71 eine Sicherung 74 geschaltet. Diese Sicherung ist vorzugsweise als Leiterbahnsicherung ausgebildet. Wird einer der Kurzschlussschalter 73 von der Steuereinheit leitend geschaltet, so wird die Stromzufuhr zu dem zu schützenden Leistungshalbleiter 71 und zu dem mit diesem verbundenen Heizelement 72 dauerhaft unterbrochen.

Durch die Ausbildung der Sicherung 74 als Leiterbahnsicherung ist diese Bestandteil der Leiterbahnstruktur und muss nicht als zusätzliches Bauteil montiert oder bestückt werden.

Im Gegensatz zu bekannten Schmelzsicherungen löst das beschriebene Sicherungskonzept für PTC-Heizungen nicht passiv aufgrund eines erhöhten Stroms des Lastkreises aus, der beispielsweise durch einen Kurzschluss in der Last verursacht ist. Erfindungsgemäß ist ein separater Kurzschlusspfad vorgesehen, in dem bei Aktivierung eines Kurzschlussschalters ein erhöhter Strom fließt und ein Auslösen der Sicherung bewirkt wird. Im Gegensatz zu herkömmlichen Sicherungskonzepten beabsichtig die vorliegende Erfindung nicht ein fehlerhaftes Heizelement abzuschalten, sondern zuverlässig einen fehlerhaften Leistungshalbleiter einer Heizstufe.

Eine beispielhafte Gestaltung einer solchen Leiterbahnsicherung 74 ist in Fig. 8 dargestellt. Die Leiterbahnsicherung 80 ist vorzugsweise als Engstelle 82 mit der Breite $B_E$ in einem Leiterbahnzug 81 mit der Breite B angeordnet. Durch die Engstelle 82 kommt es in einem im Vergleich zu einer Gesamtlänge $L_G$ der Leiterbahn 80 kurzen Leiterbahnstück der Länge $L_E$ zu einer deutlichen Erhöhung des Widerstandes pro Länge. Damit bleibt der Gesamtwiderstand des Leiterbahnzuges und damit auch der Spannungsabfall über diesem nahezu unverändert niedrig, an der Engstelle 82 kommt es dagegen zu einem deutlichen Spannungsabfall $\Delta U$.

Im Kurzschlussfall kommt es durch den Kurzschlussstrom $I_K$ an der Engstelle 82 zu einer Verlustleistung $P_v$ mit einer starken Erwärmung, so dass das Leiterbahnstück 80 an der Engstelle 82 durchbrennt. Damit sind der Leiterbahnzug und der Stromfluss unterbrochen.

An der Engstelle 82 ist die Leiterbahn typischerweise aus einer Kupferfolie mit einer Dicke von 35 bis 70 μm ausgebildet. Durch eine geeignete Dimensionierung wird gewährleistet, dass im Normalbetrieb, wenn der Nennstrom $I_N$ mit $I_N \ll I_K$ fließt, die Erwärmung an der Engstelle 82 gering ist. Im Normalbetrieb kommt es somit nicht zu einem Durchbrennen des Leiterbahnstücks an der Engstelle 82.

Um ein zuverlässiges Durchbrennen der Leiterbahnsicherung 80 im Ansprechfall zu gewährleisten, muss der für das Durchbrennen erforderliche Kurzschlussstrom $I_K$ fließen. Der Kurzschlussstrom wird im Wesentlichen durch die Bordnetzspannung $U_B$ und über die Zuleitungswiderstände $R_{Zul}$ bestimmt. In erster Näherung gilt:

$$I_K = U_B / R_{Zul}.$$

Bei elektrischen Heizvorrichtungen sind im Allgemeinen mehrere, getrennt schaltbare Lastkreise, d.h. Heizstufen, parallel geschaltet. Damit ist gewährleistet, dass die Zuleitungswiderstände $R_{Zu}$, ausreichend niedrig sind, da die Zuleitungen nicht auf den Nennstrom eines Lastkreises, sondern auf den Summenstrom aller Lastkreise ausgelegt sind. In Fig. 7 sind beispielhaft zwei Heizstufen mit entsprechenden Lastkreisen der Leistungshalbleiter dargestellt. Im Allgemeinen werden bei elektrischen Zusatzheizungen drei, vier oder fünf Heizstufen eingesetzt.

Um den Fehlerfall zu detektieren und die Leiterbahnsicherung auszulösen, wird zunächst eine Erkennung eines nicht abschaltbaren Leistungshalbleiters durchgeführt. Zu diesem Zweck wird bei in der in Fig. 7 gezeigten Ausführungsform die Spannung $U_L$ des Lastkreises des Leistungshalbleiters 71 abgefragt. Bei einem nicht angesteuerten Leistungshalbleiter 71 ist der Lastkreis nicht Strom-durchflossen und die Spannung daher 0 Volt. Wird jedoch eine Spannung $U_L$ größer als 0 Volt festgestellt, so ist der Leistungshalbleiter 71 trotz fehlender Ansteuerung leitend. In diesem Fall leitet die Steuereinheit eine Unterbrechung der Stromzufuhr zu diesem Leistungshalbleiter ein.

Um ein sicheres Durchbrennen der entsprechenden Leiterbahnsicherung 74 zu gewährleisten, werden in einem ersten Schritt alle anderen Lastkreise, d.h. Heizstufen der Heizvorrichtung, abgeschaltet. Mit dieser Maßnahme wird gewährleistet, dass der Kurzschlussstrom $I_K$ vollständig zum Durchbrennen der Leiterbahnsicherung zur Verfügung steht. Anschließend wird der Kurzschlussschalter 73 für eine festgelegte Zeit $T_{Br}$ angesteuert.

Nach Ablauf der vorgegebenen Zeitspanne $T_{Br}$ wird überprüft, ob die Leiterbahnsicherung 74 tatsächlich durchgebrannt ist. Zu diesem Zweck wird wiederum die Spannung $U_L$ des Lastkreises des entsprechenden Leistungshalbleiters 71 abgefragt. Gegebenenfalls werden die letzten beiden Schritte wiederholt durchgeführt, nämlich die Ansteuerung des Kurzschlussschalters 73 und die Überprüfung, ob die Leiterbahnsicherung tatsächlich durchgebrannt ist.

Als Kurzschlussschalter 73 kommen vorzugsweise Halbleiterschalter IGBTs oder Bipolartransistoren zum Einsatz, aber auch MOSFETs oder Thyristoren. Grundsätzlich sind ebenfalls elektromechanische Schalter in Form von Relais als Kurzschlussschalter verwendbar.

Eine zu Fig. 7 alternative Implementierung des erfindungsgemäßen Sicherungskonzepts einer PTC-Heizung ist in Fig. 9 dargestellt. Um den zusätzlichen Hardwareaufwand zu vermindern und insbesondere auch den zusätzlichen Platzbedarf auf der Steuerplatine, wird ein Kurzschlussschalter gleichzeitig zur Absicherung einer Mehrzahl von Lastkreisen verwendet. Der Kurzschlussschalter 90 ersetzt die beiden in Fig. 7 dargestellten Kurzschlussschalter 73, die jeweils einer einzigen Heizstufe zugeordnet waren. Der Kurzschlussschalter 90 dient vorzugsweise zur Absicherung von zwei Heizstufen, es ist aber auch jede andere Anzahl von entsprechend gekoppelten Heizstufen möglich. Damit kann die Anzahl der zusätzlich erforderlichen Halbleiterbausteine für Kurzschlussschalter und der zusätzliche Platzbedarf auf der Steuerplatine so gering wie möglich gehalten werden.

Mit der in Fig. 9 gezeigten Implementierung des erfindungsgemäßen Sicherungskonzeptes werden im Fehlerfall zwei Leiterbahnsicherungen 74 durchtrennt. Eine beispielhafte Ausgestaltung für zwei entsprechend verbundene Leiterbahnsicherungen ist in Fig. 10 dargestellt.

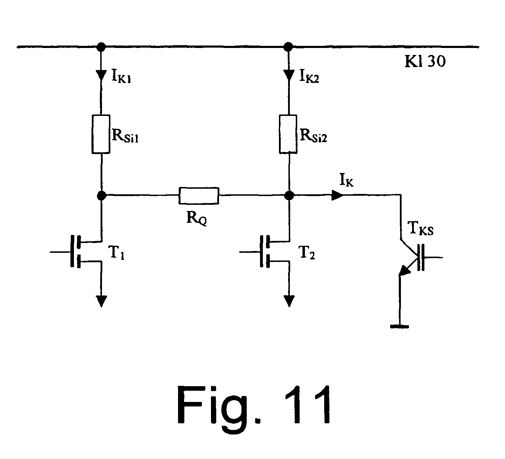

Zwischen der ersten Leiterbahn-Sicherung 101 und dem zugehörigen Leistungshalbleiter $T_1$ und der Leiterbahn-Sicherung 102 mit dem dazugehörigen Leistungshalbleiter $T_2$ befindet sich ein Quersteg 105 als elektrische Querverbindung, vorzugsweise in Form einer Leiterbahn. Jedes Stück Leiterbahn der in Fig. 10 gezeigten beispielhaften Implementierung besitzt eine endliche elektrische Leitfähigkeit, die bei hohen Strömen nicht vernachlässigbar ist und zu Spannungsabfällen führt. Eine elektrische Ersatzschaltung mit elektrischen Widerständen der Anordnung nach der Fig. 10 ist in Fig. 11 wiedergegeben.

Die beiden Leiterbahnzüge mit den Leiterbahn-Sicherungen 101, 102 werden durch die Widerstände $R_{Si1}$, $R_{Si2}$ repräsentiert. Die elektrische Querverbindung 105 wird durch den Widerstand $R_Q$ dargestellt. Bei durchgeschaltetem Kurzschlussschalter 90 ($T_{KS}$) teilt sich der Kurzschlussstrom $I_K$ auf die beiden Zweige auf, nämlich durch den Widerstand $R_{Si2}$ und durch die Reihenschaltung aus $R_{Si2}$ und $R_Q$. Für den Stromfluss gilt:

$$I_K = I_{K1} + I_{K2}.$$

Für die Stromaufteilung auf die beiden Zweige gilt:

$$I_{K2} / I_{K1} = (R_{Si1} + R_Q) / R_{Si2}.$$

Durch geeignete Wahl der Widerstände $R_{Si1}$, $R_{Si2}$, $R_Q$ lässt sich die Aufteilung des Kurzschlussstroms $I_K$ auf die Leiterbahnsicherungen 101, 102 einstellen. Damit lässt sich der Kurzschlussstrom so aufteilen, dass im Kurzschlussfall nur durch eine der Sicherungen ein um ein Mehrfaches höherer Strom als durch die andere/anderen fließt. Die Sicherung mit dem höheren Kurzschlussstrom wird daher zunächst durchbrennen. Anschließend fließt der gesamte Kurzschlussstrom über die andere Leiterbahnsicherung, so dass auch diese zuverlässig durchbrennt. Erfindungsgemäß wird daher bei einer Mehrzahl durchzutrennender Stromzuführungen eine schrittweise Durchtrennung jeder einzelnen Leiterbahnsicherung bewirkt. Auf diese Weise kann sicher ein zu niedriger Kurzschlussstrom für jede der durchzutrennenden Leiterbahnsicherungen verhindert werden.

Die aufeinanderfolgende Durchtrennung der Leiterbahnsicherungen einer "Sicherungsgruppe" wird im folgenden Ausführungsbeispiel erläutert. Dazu wird angenommen, dass:

$$R_{Si1} = R_{Si2} = R_{Si}$$

$$R_Q = 2 * R_{Si}.$$

Demzufolge ergibt sich:

$$I_{K2} / I_{K1} = (R_{Si} + 2 * RSi) / R_{Si} = 3$$

bzw.

$$I_{K2} = 3 * I_{K1}.$$

Im Kurzschlussfall fließen demgemäss zunächst 75 % des Kurzschlussstroms $I_K$ durch die Leiterbahnsicherung 102. Nachdem die Leiterbahnsicherung 102 durchgebrannt ist, fließt der gesamte Kurzschlussstrom (100 %) durch die zweite Leiterbahnsicherung 101. Damit ist ein sicheres Durchbrennen beider Leiterbahnsicherungen 101, 102 gewährleistet, um den Stromfluss durch die Lastkreise beider Leistungshalbleiter 71 bei einem Defekt eines der beiden Halbleiterschalter 71 sicher zu unterbrechen.

Das obengenannte Ausführungsbeispiel dient nur der Illustration der besonderen Ausgestaltung der vorliegenden Erfindung. Selbstverständlich sind beliebige andere Kombinationen von Widerständen $R_{Si1}$, $R_{Si2}$, $R_Q$ bzw. Auslegungen der beiden Leiterbahnsicherungen 101, 102 und des Querstegs 105 möglich. Die vorliegende Erfindung ist nicht auf die oben beschriebene Auslegung der Widerstände eingeschränkt. Ebenso ist die vorliegende Erfindung nicht auf die Verwendung von einer Gruppe aus allein zwei Leiterbahnsicherungen 101, 102 die über einen Quersteg miteinander verbunden sind, beschränkt. Eine beliebige Anzahl von Leistungshalbleitern 71 kann in entsprechender Weise abgesichert werden.

Normalerweise wird die Heizvorrichtung und mit ihr die Steuervorrichtung beim Ausschalten der Zündung des Kraftfahrzeugs deaktiviert. Die Heizung kann jedoch auch so an das Bordnetz des Kraftfahrzeugs angeschlossen sein, dass Sie bei abgestelltem Fahrzeug aktivierbar ist. Ein Halbleiterausfall kann somit auch bei ausgeschalteter Zündung auftreten. Das ausgefallene Leistungshalbleiterbauelement führt dann Strom der entsprechenden Heizstufe zu - mit den oben beschriebenen negativen Folgen. Um auch bei abgestelltem Kraftfahrzeug einen Schaden für die Heizvorrichtung und das Kraftfahrzeug bei Ausfall eines Transistors zu vermeiden, werden nachfolgend zwei alternative, besondere Ausgestaltungen der Erfindung beschrieben.

Gemäß einer ersten Ausführungsform zur Absicherung der Heizvorrichtung gegen einen Ausfall eines Leistungshalbleiters bei Zündung AUS wird die Betriebsspannung jedes Lastkreises $U_L$, d.h. jeder Heizstufe, der in Fig. 7 und Fig. 9 gezeigten Steuereinheit bzw. dem Spannungsregler zugeführt.

Sobald einer der Leistungshalbleiter 71 ausfällt und ständig leitend ist, liegt die Spannung $U_L$ auf Batterieniveau. Diese Spannung wird dem Spannungsregler zugeführt, der daraufhin die Steuereinheit μC mit Spannung versorgt und aktiviert. Bei der Stellung Zündung AUS des Kraftfahrzeugs ist die Steuereinheit μC abgeschaltet und alle Leistungshalbleiter 71 gesperrt geschaltet. Keine der Heizstufen ist daher mit Strom versorgt und die Spannung $U_L$ ist Null. Tritt ein Halbleiterdefekt in einem der Leistungshalbleiter 71 auf, so ist die entsprechende Heizstufe von Strom durchflossen und die Steuereinheit μC wird automatisch aktiviert. Durch diese Aktivierung wird der Fehler in der Funktion einer der Leistungshalbleiter 71 detektiert und der entsprechende Leistungshalbleiter (bzw. die Gruppe von Leistungshalbleitern gemäß Fig. 9) von der Stromzuführung durch Unterbrechung der Leiterbahnsicherungen - wie oben beschrieben — getrennt.

Mit der erfolgreichen Trennung des defekten Leistungshalbleiters 71 von der Stromversorgung ist auch die Steuereinheit μC von der Stromzufuhr getrennt und damit anschließend wieder automatisch deaktiviert.

Gemäß einer zweiten alternativen Ausführungsform wird die Steuereinheit μC in periodischen Zeitabständen aktiviert. Zu diesem Zweck befindet sich die Steuereinheit in einem "Sleep"-Modus mit einer Stromaufnahme von nur wenigen μA. Durch einen internen Zeitgeber, der vorzugsweise in den Spannungsregler oder die Steuereinheit μC integriert ist, wechselt die Steuereinheit in den aktiven Arbeitsmodus und überprüft die ordnungsgemäße Funktionalität der Ansteuerung der Heizleistungsstufen.

Zur periodischen Überwachung wechselt die Steuereinheit vorzugsweise in Zeitabständen zwischen 10ms und 1s zwischen dem Sleep-Modus und dem aktiven Arbeitsmodus. Damit wird erreicht, dass die mittlere Stromaufnahme im Bereich weniger μA bleibt. Wird ein defekter Leistungshalbleiter 71 erkannt, löst die Steuereinheit automatisch ein Abtrennen dieses Leistungshalbleiters von der Stromversorgung in der erfindungsgemäßen Weise aus.

Zusammenfassend betrifft die vorliegende Erfindung eine elektrische Heizvorrichtung mit einem verbesserten Sicherheitskonzept. Zu diesem Zweck wird die Funktion eines Leistungshalbleiters, der zur Einstellung des Stroms einer Heizstufe mit PTC-Heizelementen dient, überwacht. Sobald der Leistungshalbleiter der Heizstufe ohne eine entsprechende Ansteuerung Strom zuführt, wird der Strompfad zu dem Leistungshalbleiter dauerhaft unterbrochen. Damit kann der fehlerhafte Lastschalter zuverlässig außer Betrieb gesetzt und ein Folgeschaden für die Heizung und das Kraftfahrzeug verhindert werden.

**Patentansprüche**

1. Elektrische Heizvorrichtung, insbesondere als Zusatzheizung für Kraftfahrzeuge, mit wenigstens einem PTC-Heizelement (52), einem Leistungshalbleiter (51) zur Einstellung des dem PTC-Heizelement (52) zugeführten Stroms und einer Steuereinheit (50) zur Ansteuerung des Leistungshalbleiters (51) umfassend

   eine Überwachungseinrichtung (53) zur Erfassung, ob der Leistungshalbleiter (51) dem PTC-Heizelement (52) Strom zuführt,

   **gekennzeichnet durch**

   ein Unterbrecherelement (54, 55) zur Unterbrechung der Stromzuführung zu dem Leistungshalbleiter (51),

   wobei das Unterbrecherelement (54, 55) einen Schalter (54) umfasst, der die Stromzuführung zu dem Leistungshalbleiter (51) kurzschließt, um eine Unterbrechung der Stromzuführung zu bewirken, und

   wobei die Steuereinheit (50) eine Unterbrechung **durch** das Unterbrecherelement (54, 55) veranlasst, wenn die Überwachungseinrichtung (53) eine Stromzufuhr erfasst, ohne dass eine entsprechende Ansteuerung des Leistungshalbleiters (51) **durch** die Steuereinheit (50) vorliegt.

2. Elektrische Heizvorrichtung nach Anspruch 1, wobei die Überwachungseinrichtung (53) in den Leistungshalbleiter integriert ist.

3. Elektrische Heizvorrichtung nach Anspruch 1 oder 2, wobei das Unterbrecherelement (54, 55) in der Stromzuführung zu dem wenigstens einen Leistungshalbleiter (51) angeordnet ist.

4. Elektrische Heizvorrichtung nach Anspruch 3 mit einer Mehrzahl von Leistungshalbleitern (51) mit jeweils wenigstens einem zugeordneten PTC-Heizelement (52) zur Einstellung des dem jeweiligen PTC-Heizelement (52) zugeführten Stroms gemäß der Ansteuerung durch die Steuereinheit (50).

5. Elektrische Heizvorrichtung nach einem der Ansprüche 1 bis 4, wobei der Schalter (54) jeweils die Stromzuführung zu einer jeweils Mehrzahl von Leistungshalbleitern (51) kurzschließt.

**6.** Elektrische Heizvorrichtung nach Anspruch 5, wobei das Unterbrecherelement (54, 55) außerdem einen Leitungsabschnitt (55) der Stromzuführung zu dem wenigstens einen Leistungshalbleiter (51) umfasst, der so ausgelegt ist, dass ein von dem Schalter (54) verursachter Kurzschlussstrom eine Leitungsunterbrechung bewirkt.

**7.** Elektrische Heizvorrichtung nach Anspruch 6, wobei der Leitungsabschnitt (55) ein Leiterbahnabschnitt der Stromzuführung ist.

**8.** Elektrische Heizvorrichtung nach Anspruch 7, wobei der Querschnitt der Leiterbahn so dimensioniert ist, dass die Leiterbahn die Stromzuführung bei einem vorgegebenen Stromwert unterbricht.

**9.** Elektrische Heizvorrichtung nach einem der Ansprüche 5 bis 8, wobei der Schalter (54) eine Relais oder eine Halbleiterschalter ist, insbesondere ein IGBT.

**10.** Elektrische Heizvorrichtung nach einem der Ansprüche 1 bis 9, wobei die Steuereinheit elektrisch mit dem Lastkreis des Leistungshalbleiters zur automatischen Aktivierung der Steuereinheit bei Ausfall des Leistungshalbleiters bei abgestellter Zündung des Kraftfahrzeugs verbunden ist.

**11.** Elektrische Heizvorrichtung nach einem der Ansprüche 1 bis 9, wobei die Steuereinheit bei abgestellter Zündung des Kraftfahrzeugs in periodischen Zeitabständen zur Überwachung der Funktionalität des Leistungshalbleiters aktiviert wird.

**12.** Elektrische Heizvorrichtung nach einem der Ansprüche 1 bis 11, wobei die Steuervorrichtung (50) eine Heizleistungsanforderung an die elektrische Heizvorrichtung in eine PWM-Steuerung der Leistungshalbleiter (51) umsetzt.

**13.** Elektrische Heizvorrichtung nach Anspruch 12, wobei die Steuervorrichtung (50) mit einem Kraftfahrzeug-Datenbus zur Übertragung der Heizleistungsanforderung verbindbar ist.

**14.** Verfahren zur Steuerung einer elektrischen Heizvorrichtung, insbesondere als Zusatzheizung für Kraftfahrzeuge, mit wenigstens einem PTC-Heizelement (52) und einem Leistungshalbleiter (51) zur Einstellung des dem PTC-Heizelement (52) zugeführten Stroms, umfassend
Erfassen (S2), ob dem PTC-Heizelement (52) von dem Leistungshalbleiter (51) Strom zugeführt wird, **gekennzeichnet durch**
Unterbrechen (S4) der Stromzufuhr zu dem Leistungshalbleiter (51), wenn eine Stromzuführung zu dem PTC-Heizelement (52) erfasst wird, ohne dass eine entsprechende Ansteuerung des Leistungshalbleiters (51) vorliegt, wobei zur Unterbrechung (S4) der Stromzufuhr ein Kurzschluss in der Stromzuführung zu dem wenigstens einen Leistungshalbleiter (51) erzeugt wird.

**15.** Verfahren nach Anspruch 14, wobei die Erfassung (S2), ob dem PTC-Heizelement (52) von dem Leistungshalbleiter (51) Strom zugeführt wird, in den Leistungshalbleiter integriert ist.

**16.** Verfahren nach Anspruch 14 oder 15, wobei die Stromunterbrechung (S4) über ein in der Stromzuführung zu dem wenigstens einen Leistungshalbleiter (51) angeordnetes Unterbrecherelement (55) durchgeführt wird.

**17.** Verfahren nach Anspruch 16, wobei die elektrische Heizvorrichtung eine Mehrzahl von Leistungshalbleitern (51) mit jeweils wenigstens einem zugeordneten PTC-Heizelement (52) aufweist, die den dem jeweiligen PTC-Heizelement (52) zugeführten Strom einstellen.

**18.** Verfahren nach Anspruch 17, wobei der Kurzschluss die Stromzuführung zu einer jeweils Mehrzahl von Leistungshalbleitern (51) kurzschließt.

**19.** Verfahren nach Anspruch 18, wobei die Stromzuführung zu dem wenigsten einen Leistungshalbleiter (51) einen Leitungsabschnitt (55) aufweist, der so ausgelegt ist, dass ein Kurzschlussstrom auf dem Leitungsabschnitt eine Leitungsunterbrechung bewirkt.

**20.** Verfahren nach Anspruch 19, wobei der Leitungsabschnitt (55) ein Leiterbahnabschnitt der Stromzuführung ist.

**21.** Verfahren nach Anspruch 20, wobei der Querschnitt der Leiterbahn so dimensioniert wird, dass die Leiterbahn die Stromzuführung bei einem vorgegebenen Stromwert unterbricht.

**22.** Verfahren nach einem der Ansprüche 14 bis 21, wobei zur Erfassung (S2), ob dem PTC-Heizelement (52) Strom zugeführt wird, die Spannung ($U_L$) erfasst wird, die an dem PTC-Heizelement (52) anliegt.

**23.** Verfahren nach einem der Ansprüche 18 bis 22, wobei zur Unterbrechung (S4) der Stromzufuhr vor der Ansteuerung des Unterbrecherelements (54, 55) alle Leistungshalbleiter (51) so angesteuert werden, dass sie den Heizelementen (52) keinen Strom zuführen.

**24.** Verfahren nach einem der Ansprüche 14 bis 23, wobei zur Unterbrechung (S4) der Stromzufuhr der Kurzschluss für eine vorbestimmte Zeit erzeugt wird.

**25.** Verfahren nach einem der Ansprüche 14 bis 24, wobei nach dem Schritt (S4) zur Unterbrechung der Stromzufuhr eine Überprüfung (S5) durchgeführt wird, ob der Leistungshalbleiter (51) dem PTC-Heizelement (52) tatsächlich keinen Strom mehr zuführt.

**26.** Verfahren nach Anspruch 25, wobei der Schritt (S4) zur Unterbrechung der Stromzufuhr zu dem Leistungshalbleiter (51) wiederholt ausgeführt wird, wenn bei der Überprüfung (S5) festgestellt wird, dass der Leistungshalbleiter (51) dem PTC-Heizelement (52) Strom zuführt.

**27.** Verfahren nach einem der Ansprüche 14 bis 26, wobei der Kurzschluss von einem Relais oder einem Halbleiterschalter, insbesondere einem IGBT, erzeugt wird.

**28.** Verfahren nach einem der Ansprüche 14 bis 27, wobei eine Heizleistungsanforderung an die elektrische Heizvorrichtung zur Ansteuerung des Leistungshalbleiters (51) in eine PWM-Steuerung umgesetzt wird.

**29.** Verfahren nach einem der Ansprüche 14 bis 28, wobei die Steuereinheit bei abgestellter Zündung des Kraftfahrzeugs mit den Heizstufen verbunden ist und somit bei Stromzufuhr zu einer Heizstufe aufgrund eines Ausfalls des Leistungshalbleiters automatisch aktiviert wird.

**30.** Verfahren nach einem der Ansprüche 14 bis 28, wobei die Steuereinheit bei abgestellter Zündung des Kraftfahrzeugs in periodischen Zeitabständen zur Überwachung der Funktionalität des Leistungshalbleiters aktiviert wird.

**31.** Verfahren nach Anspruch 30, wobei die Heizleistungsanforderung an die elektrische Heizvorrichtung über einen Kraftfahrzeug-Datenbus zugeführt wird.

**Claims**

**1.** Electrical heating device, in particular as supplementary heating for motor vehicles, with at least one PTC heating element (52), a power semiconductor (51) for adjusting the current which is fed to the PTC heating element (52), and a control unit (50) for driving the power semiconductor (51), including a monitoring device (53), to detect whether the power semiconductor (51) is feeding current to the PTC heating element (52), **characterized by** an interrupter element (54, 55) to interrupt the current feed to the power semiconductor (51),

wherein the interrupter element (54, 55) includes a switch (54), which short-circuits the current feed to the power semiconductor (51) to interrupt the current feed, and wherein the control unit (50) causes an interruption by the interrupter element (54, 55) if the monitoring device (53) detects a current feed without corresponding driving of the power semiconductor (51) by the control unit (50) being present.

**2.** Electrical heating device according to Claim 1, wherein the monitoring device (53) is integrated in the power semiconductor.

**3.** Electrical heating device according to Claim 1 or 2, wherein the interrupter element (54, 55) is arranged in the current feed to the at least one power semiconductor (51).

**4.** Electrical heating device according to Claim 3, with multiple power semiconductors (51), each with at least one associated PTC heating element (52), for adjusting the current which is fed to the appropriate PTC heating element (52), as driven by the control unit (50).

**5.** Electrical heating device according to one of Claims 1 to 4, wherein the switch (54) in each case short-circuits the current feed to multiple power semiconductors (51).

**6.** Electrical heating device according to Claim 5, wherein the interrupter element (54, 55) also includes a line section (55) of the current feed to the at least one power semiconductor (51), which is designed so that a short-circuit current caused by the switch (54) causes a line interruption.

**7.** Electrical heating device according to Claim 6, wherein the line section (55) is a track section of the current feed.

**8.** Electrical heating device according to Claim 7, wherein the cross-section of the track is dimensioned so that the track interrupts the current feed at a specified current value.

**9.** Electrical heating device according to one of Claims 5 to 8, wherein the switch (54) is a relay or a semiconductor switch, in particular an IGBT.

**10.** Electrical heating device according to one of Claims 1 to 9, wherein the control unit is connected electrically to the load circuit of the power semiconductor, for automatic activation of the control unit if the power semiconductor fails when the ignition of the motor vehicle is switched off.

**11.** Electrical heating device according to one of Claims 1 to 9, wherein when the ignition of the motor vehicle is switched off, the control unit is activated at periodic intervals to monitor the functioning of the power semiconductor.

**12.** Electrical heating device according to one of Claims 1 to 11, wherein the control device (50) converts a heating power demand to the electrical heating device into a PWM control of the power semiconductors (51).

**13.** Electrical heating device according to Claim 12, wherein the control device (50) can be connected to a motor vehicle data bus to transmit the heating power demand.

**14.** Method of controlling an electrical heating device, in particular as supplementary heating for motor vehicles, with at least one PTC heating element (52) and a power semiconductor (51) for adjusting the current which is fed to the PTC heating element (52), including

detecting (S2) whether the power semiconductor (51) is feeding current to the PTC heating element (52),

**characterized by**

interruption (S4) of the current feed to the power semiconductor (51) if a current feed to the PTC heating element (52) is detected without corresponding driving of the power semiconductor (51) being present, a short circuit in the current feed to the at least one power semiconductor (51) being generated to interrupt (S4) the current feed.

**15.** Method according to Claim 14, wherein the detection (S2) whether the power semiconductor (51) is feeding current to the PTC heating element (52) is integrated in the power semiconductor.

**16.** Method according to Claim 14 or 15, wherein the current interruption (S4) is carried out via an interrupter element (55) which is arranged in the current feed to the at least one power semiconductor (51).

**17.** Method according to Claim 16, wherein the electrical heating device has multiple power semiconductors (51), each with at least one associated PTC heating element (52), which adjust the current which is fed to the appropriate PTC heating element (52).

**18.** Method according to Claim 17, wherein the short circuit short-circuits the current feed to multiple power semiconductors (51).

**19.** Method according to Claim 18, wherein the current feed to the at least one power semiconductor (51) has a line section (55) which is designed so that a short-circuit current on the line section interrupts the line.

**20.** Method according to Claim 19, wherein the line section (55) is a track section of the current feed.

**21.** Method according to Claim 20, wherein the cross-section of the track is dimensioned so that the track interrupts the current feed at a specified current value.

**22.** Method according to one of Claims 14 to 21, wherein to detect (S2) whether current is being fed to the PTC heating element (52), the voltage ($U_L$) which is present at the PTC heating element (52) is captured.

**23.** Method according to one of Claims 18 to 22, wherein to interrupt (S4) the current feed before the interrupter element (54, 55) is driven, all power semiconductors (51) are driven so that they feed no current to the heating elements (52).

**24.** Method according to one of Claims 14 to 23, wherein to interrupt (S4) the current feed, the short circuit is generated for a predetermined time.

**25.** Method according to one of Claims 14 to 24, wherein after the step (S4) to interrupt the current feed, a test (S5) whether the power semiconductor (51) is actually no longer feeding current to the PTC heating element (52) is carried out.

**26.** Method according to Claim 25, wherein the step (S4) to interrupt the current feed to the power semiconductor (51) is executed repeatedly, if it is established in the test (S5) that the power semiconductor (51) is feeding current to the PTC heating element (52).

**27.** Method according to one of Claims 14 to 26, wherein the short circuit is generated by a relay or semiconductor switch, in particular an IGBT.

**28.** Method according to one of Claims 14 to 27, wherein a heating power demand to the electrical heating device is converted into a PWM control to drive the power semiconductor (51).

**29.** Method according to one of Claims 14 to 28, wherein when the ignition of the motor vehicle is switched off, the control unit is connected to the heating stages, and thus when current is fed to a heating stage because of a failure of the power semiconductor, is activated automatically.

**30.** Method according to one of Claims 14 to 28, wherein when the ignition of the motor vehicle is switched off, the control unit is activated at periodic intervals to monitor the functioning of the power semiconductor.

**31.** Method according to Claim 30, wherein the heating power demand is fed to the electrical heating device via a motor vehicle data bus.

**Revendications**

**1.** Dispositif de chauffage électrique, notamment en tant que chauffage supplémentaire pour des véhicules automobiles, avec au moins un élément chauffant PTC (52), un semi-conducteur de puissance (51) pour régler le courant conduit à l'élément chauffant PTC (52) et une unité de commande (50) destinée à commander le semi-conducteur de puissance (51), comportant
un dispositif de surveillance (53) pour détecter si le semi-conducteur de puissance (51) conduit un courant à l'élément chauffant PTC (52),
**caractérisé par**
un élément interrupteur (54, 55) pour interrompre l'arrivée de courant vers le semi-conducteur de puissance (51),
dans lequel l'élément interrupteur (54, 55) comporte un commutateur (54), qui court-circuite l'arrivée de courant vers le semi-conducteur de puissance (51), afin de provoquer un arrêt de l'arrivée de courant, et dans lequel l'unité de commande (50) occasionne un arrêt au moyen de l'élément interrupteur (54, 55), lorsque le dispositif de surveillance (53) détecte une arrivée de courant, sans qu'une commande correspondante du semi-conducteur de puissance (51) par l'unité de commande (50) ne soit présente.

**2.** Dispositif de chauffage électrique selon la revendication 1, dans lequel le dispositif de surveillance (53) est intégré dans le semi-conducteur de puissance.

**3.** Dispositif de chauffage électrique selon la revendication 1 ou 2, dans lequel l'élément interrupteur (54, 55) est disposé dans l'arrivée de courant vers le semi-conducteur de puissance au moins au nombre de un (51).

**4.** Dispositif de chauffage électrique selon la revendication 3 pourvu d'une pluralité de semi-conducteurs de puissance (51) avec chacun au moins un élément chauffant PTC (52) associé pour régler le courant conduit à l'élément chauffant PTC (52) respectif selon la commande par l'unité de commande (50).

**5.** Dispositif de chauffage électrique selon l'une quelconque des revendications 1 à 4, dans lequel le commutateur (54) court-circuite respectivement l'arrivée de courant vers chacun d'une pluralité de semi-conducteurs de puissance (51).

**6.** Dispositif de chauffage électrique selon la revendication 5, dans lequel l'élément interrupteur (54, 55) comporte en outre une section de ligne (55) de l'arrivée de courant vers le semi-conducteur de puissance (51) au moins au nombre de un, laquelle ligne est conçue de telle sorte qu'un courant de court-circuit engendré par le commutateur (54) provoque une interruption de ligne.

**7.** Dispositif de chauffage électrique selon la revendication 6, dans lequel la section de ligne (55) est une section de piste conductrice de l'arrivée de courant.

**8.** Dispositif de chauffage électrique selon la revendication 7, dans lequel la coupe transversale de la piste conductrice est dimensionnée de manière à ce que la piste conductrice interrompe l'arrivée de courant dans le cas d'une valeur de courant prédéfinie.

**9.** Dispositif de chauffage électrique selon l'une quelconque des revendications 5 à 8, dans lequel le commutateur (54) est un relais ou un commutateur semi-conducteur, notamment un transistor bipolaire à grille isolée (IGBT).

**10.** Dispositif de chauffage électrique selon l'une quelconque des revendications 1 à 9, dans lequel l'unité de commande est reliée électriquement au circuit de charge du semi-conducteur de puissance pour l'activation automatique de l'unité de commande en cas de défaillance du semi-conducteur de puissance lors de l'allumage coupé du véhicule.

**11.** Dispositif de chauffage électrique selon l'une quelconque des revendications 1 à 9, dans lequel l'unité de commande est activée, lors de l'allumage coupé du véhicule, à des intervalles de temps périodiques pour surveiller la fonctionnalité du semi-conducteur de puissance.

**12.** Dispositif de chauffage électrique selon l'une quelconque des revendications 1 à 11, dans lequel le dispositif de commande (50) transforme une demande de puissance de chauffage au niveau du dispositif de chauffage électrique en une commande de modulation de largeur d'impulsion du semi-conducteur de puissance (51).

**13.** Dispositif de chauffage électrique selon la revendication 12, dans lequel le dispositif de commande (50) peut être relié à un bus de transmission de données du véhicule pour la transmission de la demande de puissance de chauffage.

**14.** Procédé de commande d'un dispositif de chauffage électrique, notamment en tant que chauffage supplémentaire pour des véhicules automobiles, avec au moins un élément chauffant PTC (52) et un semi-conducteur de puissance (51) pour régler le courant conduit à l'élément chauffant PTC (52), comportant les étapes :

détecter (S2) si un courant est conduit par le semi-conducteur de puissance (51) à l'élément chauffant PTC (52),
**caractérisé par**
interrompre (S4) l'arrivée de courant vers le semi-conducteur de puissance (51), lorsqu'une arrivée de courant vers l'élément chauffant PTC (52) est détectée, sans qu'une commande correspondante du semi-conducteur de puissance (51) ne soit présente, un court-circuit dans l'arrivée de courant vers le semi-conducteur de puissance (51) au moins au nombre de un étant généré pour l'interruption (S4) de l'arrivée de courant.

15. Procédé selon la revendication 14, selon lequel la détection (S2) si un courant est conduit par le semiconducteur de puissance (51) à l'élément chauffant PTC (52) est intégrée dans le semi-conducteur de puissance.

16. Procédé selon la revendication 14 ou 15, selon lequel l'interruption de courant (S4) est mise en oeuvre par l'intermédiaire d'un élément interrupteur (55) disposé dans l'arrivée de courant vers le semi-conducteur de puissance (51) au moins au nombre de un.

17. Procédé selon la revendication 16, selon lequel le dispositif de chauffage électrique présente une pluralité de semi-conducteurs de puissance (51) avec chacun au moins un élément chauffant PTC (52) associé, qui règlent le courant conduit à l'élément chauffant PTC (52) respectif.

18. Procédé selon la revendication 17, selon lequel le court-circuit court-circuite l'arrivée de courant vers chacun d'une pluralité de semi-conducteurs de puissance (51).

19. Procédé selon la revendication 18, selon lequel l'arrivée de courant vers le semi-conducteur de puissance (51) au moins au nombre de un présente une section de ligne (55), qui est conçue de telle sorte qu'un courant de court-circuit sur la section de ligne provoque une interruption de ligne.

20. Procédé selon la revendication 19, selon lequel la section de ligne (55) est une section de piste conductrice de l'arrivée de courant.

21. Procédé selon la revendication 20, selon lequel la coupe transversale de la piste conductrice est dimensionnée de manière à ce que la piste conductrice interrompe l'arrivée de courant dans le cas d'une valeur de courant prédéfinie.

22. Procédé selon l'une quelconque des revendications 14 à 21, selon lequel la tension ($U_L$) PTC (52) est détectée pour détecter (S2) si un courant est conduit à l'élément chauffant PTC (52), laquelle tension est appliquée à l'élément chauffant.

23. Procédé selon l'une quelconque des revendications 18 à 22, selon lequel tous les semi-conducteurs de puissance (51) sont commandés pour l'interruption (S4) de l'arrivée de courant, avant la commande de l'élément interrupteur (54, 55), de manière à ce qu'ils n'amènent aucun courant aux éléments chauffants (52).

24. Procédé selon l'une quelconque des revendications 14 à 23, le court-circuit étant généré pour un temps prédéterminé pour l'interruption (S4) de l'arrivée de courant.

25. Procédé selon l'une quelconque des revendications 14 à 24, selon lequel une surveillance (S5) pour savoir si le semi-conducteur de puissance (51) ne conduit effectivement plus aucun courant à l'élément chauffant PTC (52) est mise en oeuvre après l'étape (S4) visant à interrompre l'arrivée de courant.

26. Procédé selon la revendication 25, selon lequel l'étape (S4) pour interrompre l'arrivée de courant vers le semi-conducteur de puissance (51) est renouvelée si, lors de la surveillance (S5), il est constaté que le semi-conducteur de puissance (51) amène du courant à l'élément chauffant PTC (52).

27. Procédé selon l'une quelconque des revendications 14 à 26, selon lequel le court-circuit est généré par un relais ou un commutateur semi-conducteur, notamment par un IGBT.

28. Procédé selon l'une quelconque des revendications 14 à 27, selon lequel une demande de puissance de chauffage au dispositif de chauffage électrique pour la commande du semi-conducteur de puissance (51) est transformée en une commande de modulation de largeur d'impulsion (PWM).

29. Procédé selon l'une quelconque des revendications 14 à 28, selon lequel l'unité de commande, en cas d'allumage coupé du véhicule, est reliée aux niveaux de chauffage et est par conséquent activée automatiquement en cas d'arrivée de courant vers un niveau de chauffage du fait d'une défaillance du semi-conducteur de puissance.

30. Procédé selon l'une quelconque des revendications 14 à 28, selon lequel l'unité de commande, en cas d'allumage coupé du véhicule, est activée à des intervalles de temps périodiques pour surveiller la fonctionnalité du semi-conducteur de puissance.

**31.** Procédé selon la revendication 30, selon lequel la demande de puissance de chauffage est conduite au dispositif de chauffage électrique par l'intermédiaire d'un bus de transmission de données du véhicule.

Fig. 1a

Fig. 1b

# Fig. 2

Fig. 3

Fig. 4a

Fig. 4b

Heizleistungsanforderung

Steuereinheit — 50

Funktionsüberwachung
(Stromfluß;
Spannung)

PWM-
Steuerung

Unterbrechungs-
Signal

51

54

53

55

52

52

Stromzuführung

Fig. 5

Heizleistungsanforderung

Ansteuerung des
Leistungshalbleiters — S1

Erfassen der Funktion des
Leistungshalbleiters — S2

Feststellen, ob der Leistungshalbleiter angesteuert ist — S3

Unterbrechen der
Stromzufuhr zu dem
Leistungshalbleiter — S4

# Fig. 6

# Fig. 7

# Fig. 8

**Fig. 9**

**Fig. 10**

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10061458 A1